# EUROPÄISCHE PATENTSCHRIFT

(11) **EP 2 986 492 B1**
(45) Veröffentlichungstag und Bekanntmachung des Hinweises auf die Patenterteilung: **01.01.2020**
(21) Anmeldenummer: 14707747.3
(22) Anmeldetag: 03.03.2014
(51) Int. Cl.: B62M 11/12

(54) **MOTORISCH UND MIT MUSKELKRAFT BETREIBBARES FAHRZEUG**
VEHICLE OPERABLE BY MEANS OF A MOTOR AND USING MUSCLE POWER
VÉHICULE ENTRAÎNABLE PAR UN MOTEUR ET PAR LA FORCE MUSCULAIRE

(30) Priorität: 15.04.2013 DE 102013206710
(43) Veröffentlichungstag der Anmeldung: 24.02.2016
(73) Patentinhaber: Robert Bosch GmbH, 70442 Stuttgart (DE)
(72) Erfinder: DORNHOEFER, Gerd, 71229 Leonberg (DE); MARTINI, Katrin, 71254 Ditzingen (DE); DOMMSCH, Hans-Peter, 77839 Lichtenau (DE); BENDEL, Karl, 71701 Schwieberdingen (DE)
(86) Internationale Anmeldenummer: PCT/EP2014/054038
(87) Internationale Veröffentlichungsnummer: WO 2014/170062

(56) Entgegenhaltungen:
- EP-A1- 1 855 028
- DE-A1- 2 245 767
- NL-A- 7 304 436

## Beschreibung

### Stand der Technik

Die vorliegende Erfindung betrifft ein motorisch und/oder mit Muskelkraft betreibbares Fahrzeug, insbesondere ein Elektrofahrrad, mit einem Kegelringgetriebe.

Beispielsweise sind Elektrofahrräder aus dem Stand der Technik mit unterschiedlichen Ausgestaltungen bekannt. Hierbei gibt es Elektrofahrräder, bei denen der elektrische Antrieb im Bereich des Tretlagers (Mittelmotorkonzept) angeordnet ist. Über eine Kette wird dann ein Hinterrad angetrieben. Hierbei kann am Hinterrad eine Schalteinrichtung, z.B. eine Kettenschaltung oder Nabenschaltung oder dergleichen, angeordnet sein. Es wäre hier wünschenswert, weitere alternative Anordnungen, insbesondere von Schalteinrichtungen, zu haben.

Die NL 7304436 offenbart ein insbesondere zweirädriges Fahrzeug, das mit einer Batterie und einem Elektromotor betrieben werden kann. Zwischen den Rädern und dem Elektromotor sind mehrere Übesetzungsstufen angeordnet, von denen wenigstens eine stufenlos einstellbar ist. Dazu wird ein in seiner Übersetzung einstellbarer Riementrieb vorgeschlagen.

Die EP 1855028 A1 offenbart ein Kegelringgetriebe mit einem zwischen zwei Kegeln verschieblich angeordneten Übertragungsring. Einer der Kegel dient als Antrieb, der andere als Abtrieb des Kegelringgetriebes. Durch Verschieben des Rings kann die Übersetzung des Getriebes eingestellt werden.

### Offenbarung der Erfindung

Das erfindungsgemäße mit Motor- und/oder Muskelkraft betreibbare Fahrzeug, insbesondere Elektrofahrrad, mit den Merkmalen des Anspruchs 1 weist den Vorteil auf, dass ein besonders kompakter Aufbau eines elektrischen Antriebs und einer Schalteinrichtung möglich ist. Dabei ist ein besonderer Vorteil, dass die Schalteinrichtung eine stufenlose Änderung einer Übersetzung ermöglicht. Hierbei kann erfindungsgemäß eine besonders kompakte Bauweise ermöglicht werden. Weiterhin kann durch eine stufenlose Änderung einer Übersetzung ein besonders gutes Zusammenspiel zwischen einem Pedalantrieb und einem elektrischen Antrieb ermöglicht werden, so dass die vorliegende Erfindung besonders für ein Elektrofahrrad geeignet ist. Hierbei kann eine Änderung der Übersetzung auch unter Last problemlos ermöglicht werden und insbesondere kann auch ein Geräusch bei einer Änderung des Übersetzungsverhältnisses vermieden werden, so dass eine erfindungsgemäße Änderung des Übersetzungsverhältnisses sehr leise ist. Dies wird erfindungsgemäß dadurch erreicht, dass das Fahrzeug einen Kurbeltrieb mit einer Tretlagerwelle, ein Kettenblatt und einen elektrischen Antrieb aufweist. Ferner umfasst das Fahrzeug ein stufenloses Kegelringgetriebe für eine stufenlose Änderung des Übersetzungsverhältnisses. Das Kegelringgetriebe ist dabei am Kurbeltrieb angeordnet und ist derart mit dem Kurbeltrieb verbunden und eingerichtet, ein durch einen Fahrer erzeugtes Drehmoment auf das Kettenblatt zu übertragen. Das stufenlose Kegelringgetriebe hat weiterhin den Vorteil, dass ein Schalten unter Last möglich ist und ein Fahrer keine Übersetzungssprünge bemerkt. Hieraus resultiert ein besonders vorteilhaftes Fahrgefühl, insbesondere in Kombination mit dem elektrischen Antrieb, da dessen Drehmoment und Drehzahl ebenfalls stufenlos steuerbar ist.

Erfindungsgemäß ist der elektrische Antrieb innerhalb eines der Kegel angeordnet. Auch hierdurch kann eine noch kompaktere Abmessung der Baueinheit erreicht werden.

Die Unteransprüche zeigen bevorzugte Weiterbildungen der Erfindung.

Für einen besonders kompakten Aufbau ist vorzugsweise das Kegelringgetriebe innerhalb eines Gehäuses des Kurbeltriebs angeordnet.

Weiter bevorzugt weist das Fahrzeug eine Getriebestufe auf, über welche der elektrische Antrieb mit dem Kettenblatt verbunden ist und das Kettenblatt antreibt. Eine Verbindung zwischen der Getriebestufe und dem Kettenblatt kann beispielsweise über eine Hülse oder dergleichen erfolgen. Die Hülse ist vorzugsweise über einen Freilauf an der Tretlagerwelle gelagert.

Weiter bevorzugt umfasst das Fahrzeug ein Planetengetriebe, welches zwischen einer Abtriebswelle des Kegelringgetriebes und dem Kettenblatt angeordnet ist. Besonders bevorzugt treibt die Abtriebswelle des Kegelringgetriebes dabei ein Sonnenrad des Planetengetriebes an. Weiter bevorzugt weist ein Hohlrad des Planetengetriebes auch eine Außenverzahnung auf, über welche ein Abtrieb aus dem Planetengetriebe, vorzugsweise auf ein Zahnrad der Getriebestufe zwischen dem elektrischen Antrieb und dem Kettenblatt, erfolgt.

Gemäß einer weiteren bevorzugten Ausgestaltung der Erfindung ist eine Übersetzung des Kegelringgetriebes mittels eines durch den Fahrer betätigbaren Aktuators veränderbar. Das Kegelringgetriebe umfasst einen Eingangskegel, einen Ausgangskegel und einen zwischen den beiden Kegeln angeordneten Kegelring. Der Aktuator betätigt dabei die Stellung des Kegelrings, um so stufenlos ein Übersetzungsverhältnis zwischen den beiden Kegeln zu verändern.

Ein besonders kompakter Aufbau ergibt sich, wenn die Tretlagerwelle durch einen der Kegel des Kegelringgetriebes, insbesondere durch den Ausgangskegel, verläuft.

Vorzugsweise umfasst das Fahrzeug ferner eine Steuereinheit und einen Sensor zur Erfassung einer Kraft, welche durch den Fahrer aufgebracht wird. Hierdurch kann ein Kraftwert bestimmt werden, wobei die Steuereinheit eingerichtet ist, den elektrischen Antrieb des Fahrzeugs, basierend auf dem erfassten Kraftwert, zu steuern. Zusätzlich oder alternativ kann auch ein vom Fahrer aufgebrachtes Drehmoment zur Steuerung des elektrischen Antriebs verwendet werden.

Besonders bevorzugt umfasst das Kegelringgetriebe eine Kegelvorspanneinrichtung, welche einen der Kegel in Axialrichtung des Kegels vorspannt. Dabei ist der Sensor zur Erfassung einer durch einen Fahrer aufgebrachten Kraft an der Kegelvorspanneinrichtung angeordnet. Die Kegelvorspanneinrichtung umfasst dabei besonders bevorzugt eine schiefe Ebene mit einer Kugel, oder eine Kegelanordnung mit einem Positivkegel und einem Negativkegel oder eine Druckkupplungsanordnung mit zwei Scheiben mit Taschen und Kugeln, wobei die Kugeln in den Taschen zwischen den beiden Scheiben angeordnet sind.

Gemäß einer weiteren bevorzugten Ausgestaltung der Erfindung ist das Kegelringgetriebe oberhalb der Tretlagerwelle angeordnet. Weiter bevorzugt ist der elektrische Motor unterhalb der Tretlagerwelle angeordnet.

Das erfindungsgemäße Fahrzeug ist besonders bevorzugt ein Elektrofahrrad, wobei durch die Verwendung des erfindungsgemäßen stufenlosen Kegelringgetriebes auf eine Schalteinrichtung an einem Hinterrad des Fahrrads verzichtet werden kann. Die Anordnung sowohl des elektrischen Antriebs als auch der Schalteinrichtung in Form des Kegelringgetriebes am Tretlager ermöglicht dabei ferner einen besonders tiefen Schwerpunkt des Elektrofahrrads, was sich positiv auf die Handling-Eigenschaften des Elektrofahrrads auswirkt.

### Zeichnung

Nachfolgend werden bevorzugte Ausführungsbeispiele unter Bezugnahme auf die begleitende Zeichnung im Detail beschrieben. In den Ausführungsbeispielen sind gleiche bzw. funktional gleiche Teile jeweils mit den gleichen Bezugszeichen bezeichnet. In der Zeichnung ist:
- Figur 1: eine schematische Darstellung eines Elektrofahrrads gemäß einem ersten nicht beanspruchten Ausführungsbeispiel,
- Figur 2: eine schematische Ansicht eines Kurbeltriebs eines Elektrofahrrads gemäß dem ersten nicht beanspruchten Ausführungsbeispiel,
- Figur 3: eine schematische Ansicht eines Kurbeltriebs eines Elektrofahrrads gemäß einem zweiten nicht beanspruchten Ausführungsbeispiel,
- Figur 4: eine schematische Ansicht eines Kurbeltriebs eines Elektrofahrrads gemäß einem dritten nicht beanspruchten Ausführungsbeispiel, und
- Figuren 5 und 6: schematische Ansichten von alternativen Kegelvorspanneinrichtungen.

### Bevorzugte Ausführungsformen

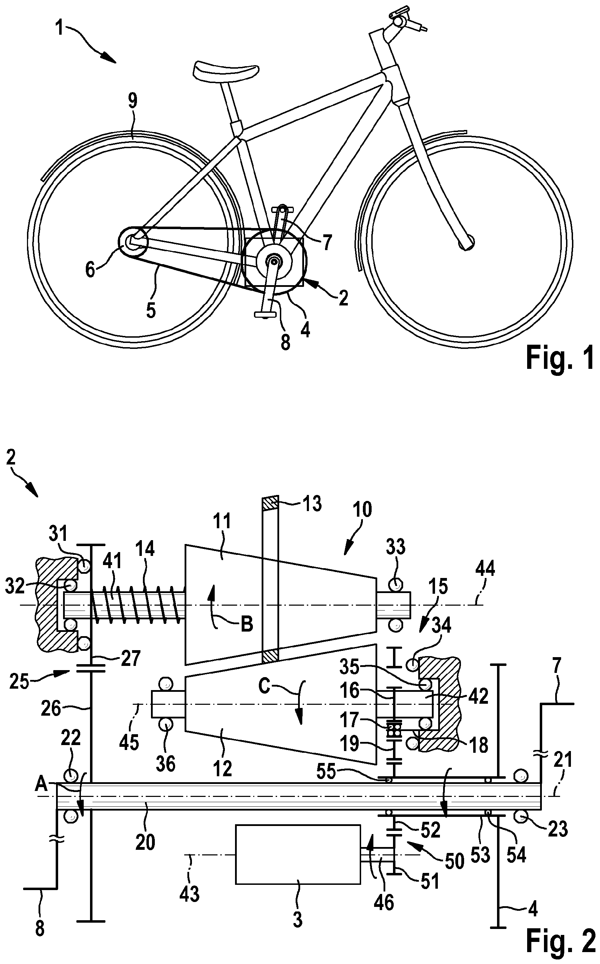

Nachfolgend wird unter Bezugnahme auf die Figuren 1 und 2 ein Elektrofahrrad 1 gemäß einem ersten bevorzugten Ausführungsbeispiel der Erfindung im Detail beschrieben.

Wie aus Figur 1 ersichtlich ist, umfasst das Elektrofahrrad 1 einen Kurbeltrieb 2, in welchen ein elektrischer Antrieb 3 (siehe Figur 2) integriert ist. Ein Kettenblatt 4 gibt eine Antriebskraft über eine Kette 5 an ein an einem Hinterrad 9 angeordnetes Ritzel 6 ab. Die Bezugszeichen 7 und 8 bezeichnen Kurbeln mit Pedalen des Elektrofahrrads.

In Figur 2 ist im Detail der Kurbeltrieb 2 gezeigt. Der Kurbeltrieb 2 umfasst neben den beiden Kurbeln 7, 8 eine Tretlagerwelle 20, welche an einem ersten Tretlager 22 und einem zweiten Tretlager 23 gelagert ist. Eine von einem Fahrer aufgebrachte Tretkraft wird dabei über die Pedale auf die Tretlagerwelle 20 übertragen. Eine Drehung der Tretlagerwelle ist durch den Pfeil A angedeutet.

An der Tretlagerwelle 20 ist ein erstes Zahnrad 26 angeordnet, welches mit einem zweiten Zahnrad 27 kämmt. Die beiden Zahnräder 26, 27 bilden dabei eine erste Getriebestufe 25. Das zweite Zahnrad 27 ist dabei an einer Eingangswelle 41 eines Kegelringgetriebes 10 angeordnet.

Das Kegelringgetriebe 10 umfasst neben der Eingangswelle 41 einen Eingangskegel 11, einen Ausgangskegel 12 und einen zwischen dem Eingangskegel und dem Ausgangskegel angeordneten Kegelring 13. Zur Vorspannung des Kegelringgetriebes in Axialrichtung ist eine Kegelvorspanneinrichtung 14 mit einer Feder vorgesehen. Eine Drehung des Eingangskegels 11 ist durch den Pfeil B angedeutet und eine Drehung des Ausgangskegels 12 ist durch den Pfeil C angedeutet. Der Ausgangskegel 12 ist an einer Ausgangswelle 42 angeordnet, wobei, wie in Figur 2 gezeigt, die Eingangswelle 41 parallel zur Ausgangswelle 42 ist. Das Bezugszeichen 44 bezeichnet dabei eine Achse der Eingangswelle und das Bezugszeichen 45 eine Achse der Ausgangswelle.

Die Eingangswelle 41 ist an einem ersten Axiallager 31 sowie einem ersten Radiallager 32 und einem zweiten Radiallager 33 gelagert. Die Ausgangswelle 42 ist an einem zweiten Axiallager 34, einem dritten Radiallager 35 und einem vierten Radiallager 36 gelagert.

Der elektrische Antrieb 3 weist eine Motorausgangswelle 46 auf, an welcher ein Motorritzel 51 angeordnet ist. Das Motorritzel 51 ist Teil einer zweiten Getriebestufe 50, wobei die zweite Getriebestufe 50 noch ein Abtriebszahnrad 52 umfasst. Das Abtriebszahnrad 52 ist an einer Hülse 53 angeordnet, an welcher auch das Kettenblatt 4 angeordnet ist. Die Hülse 53 ist dabei über ein erstes Freilauflager 54 und ein zweites Freilauflager 55 an der Tretlagerwelle 20 gelagert. Eine Motorachse ist mit dem Bezugszeichen 43 bezeichnet.

Ferner umfasst das Elektrofahrrad 1 ein Planetengetriebe 15. Das Planetengetriebe 15 ist einerseits mit dem Kegelgetriebe 10 und andererseits mit der zweiten Getriebestufe 50 verbunden. Genauer umfasst das Planetengetriebe 15 ein Sonnenrad 16, mehrere Planetenräder 17, einen Planetenradträger 18 und ein Hohlrad 19. Der Planetenradträger 18 steht hierbei fest. Das Hohlrad 19 weist neben der üblichen Innenverzahnung noch zusätzlich eine Außenverzahnung auf. Das Sonnenrad 16 ist dabei auf der Ausgangswelle 42 des Kegelringgetriebes 10 angeordnet. Das Sonnenrad 16 kämmt mit den Planetenrädern 17, welche ihrerseits mit dem Hohlrad 19 kämmen. Die Außenverzahnung des Hohlrads 19 befindet sich mit dem Abtriebszahnrad 52 der zweiten Getriebestufe 50 in Eingriff.

Somit gehen sowohl das vom elektrischen Motor 3 (falls angetrieben) als auch das vom Fahrer aufgebrachte Drehmoment über das Kegelringgetriebe 10 jeweils auf das Abtriebszahnrad 52 der zweiten Getriebestufe 50. Über die Hülse 53 und das Kettenblatt 4 wird das Drehmoment auf die Kette 5 und das Ritzel 6 am Hinterrad übertragen.

Hierbei übernimmt das Kegelringgetriebe 10 die Funktion einer Schalteinrichtung, so dass keine zusätzliche Schalteinrichtung am Hinterrad im Bereich des Ritzels 6 vorgesehen werden muss. Eine Änderung der Übersetzung am Kegelringgetriebe erfolgt durch Bewegung des Kegelrings 13 in axialer Richtung, was beispielsweise mittels eines elektrischen Aktuators ausführbar ist.

Eine Verbindung des Eingangskegels 11 mit der Eingangswelle 41 bzw. des Ausgangskegels 12 mit der Ausgangswelle 42 kann über eine Passfederverbindung oder eine Keilwelle ermöglicht werden. Hierdurch wird die axiale Bewegbarkeit der Kegel in gewissem Umfang sichergestellt.

Um einen möglichst kleinen Schlupf zu erhalten, ist vorzugsweise der Kegelring 13 gegenüber den Kegeln ballig ausgeführt. Dies führt auch zu einer verbesserten Schmierstoffversorgung, da hierdurch ein Kapillarspalt zwischen dem Kegelring 13 und den Mantelflächen der Kegel erreicht wird.

Wenn nun ein Fahrer in die Pedale tritt, wird das Drehmoment über die erste Getriebestufe 25 in das Kegelringgetriebe 10 eingegeben. Hier erfolgt eine entsprechend den Wünschen des Fahrers eingestellte Übersetzung bzw. Untersetzung und das derart geänderte Drehmoment wird in das Planetengetriebe 15 eingegeben. Das Planetengetriebe 15 gibt das geänderte Drehmoment dann über das Abtriebszahnrad 52 der zweiten Getriebestufe 50 an das Kettenblatt 4 weiter. Zusätzlich oder auch nur ausschließlich kann auch der elektrische Antrieb 3 betrieben werden, dessen Drehmoment über die zweite Getriebestufe 50 ebenfalls auf das Kettenblatt 4 übertragen wird.

Somit kann sowohl eine Schalteinrichtung als auch ein elektrischer Antrieb am Kurbeltrieb 2 angeordnet werden. Vorzugsweise sind dabei der elektrische Antrieb 3 und die als Kegelringgetriebe ausgebildete Schalteinrichtung in einem gemeinsamen Gehäuse des Kurbeltriebs 2 angeordnet. Wie aus Figur 2 ersichtlich ist, ist dabei das Kegelringgetriebe 10 über der Tretlagerwelle 20 angeordnet und der elektrische Antrieb 3 unterhalb der Tretlagerwelle 20 angeordnet. Das Kegelringgetriebe 10 kann dabei eine stufenlose Übersetzung eines von einem Fahrer aufgebrachten Drehmoments ermöglichen. Hierdurch ist ein besonders gutes Zusammenspiel des vom Fahrer aufgebrachten Drehmoments und des vom elektrischen Antrieb 3 bereitgestellten Drehmoments möglich. Insbesondere ermöglicht das Kegelringgetriebe 10 auch eine Änderung der Übersetzung unter Last, so dass auch bei einer Änderung einer Übersetzung der elektrische Antrieb 3 bei Bedarf kontinuierlich angetrieben werden kann und zusätzliches Drehmoment für einen Vortrieb bereitstellen kann.

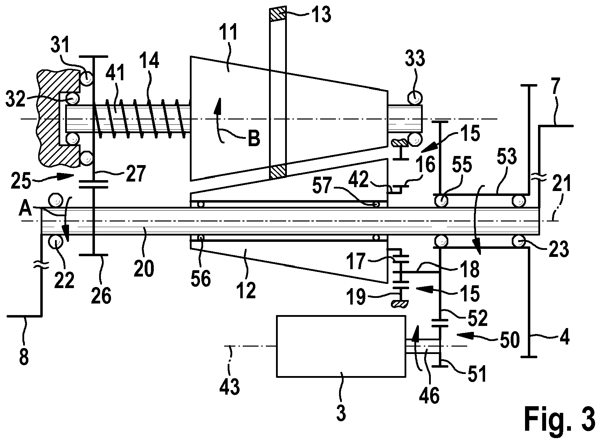

Figur 3 zeigt einen Kurbeltrieb gemäß einem zweiten Ausführungsbeispiel, bei dem im Unterschied zum ersten Ausführungsbeispiel die Tretlagerwelle 20 in einem der Kegel des Kegelringgetriebes 10 angeordnet ist. Genauer ist die Tretlagerwelle 20 im Ausgangskegel 12 des Kegelringgetriebes angeordnet. Dadurch fallen die Achse der Tretlagerwelle und die Achse des Ausgangskegels 12 zusammen. Das Elektrofahrrad des zweiten Ausführungsbeispiels umfasst ebenfalls ein Planetengetriebe 15, wobei der Ausgang des Planetengetriebes 15 beim zweiten Ausführungsbeispiel über den Planetenradträger 18 erfolgt. Wie aus Figur 3 ersichtlich ist, ist der Planetenradträger 18 mit dem Abtriebszahnrad 52 der zweiten Getriebestufe 50 verbunden. Dieser Aufbau des Kurbeltriebs ermöglicht eine noch kompaktere Lösung für die Integration des Kegelringgetriebes 10 und des elektrischen Antriebs 3 in den Kurbeltrieb 2 des Fahrrads. Der Ausgangskegel 12 ist dabei über zwei Freilauflager 56, 57 an der Tretlagerwelle 20 gelagert.

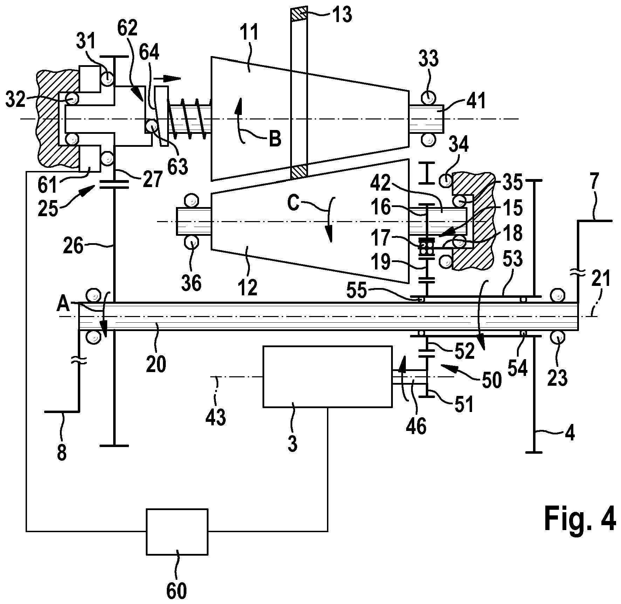

Figur 4 zeigt einen Kurbeltrieb 2 für ein Elektrofahrrad gemäß einem dritten Ausführungsbeispiel, welches im Wesentlichen dem ersten Ausführungsbeispiel entspricht. Im Unterschied dazu ist beim dritten Ausführungsbeispiel zusätzlich noch ein Sensor 61 zur Erfassung einer durch einen Fahrer über die Kurbeln 7, 8 aufgebrachten Kraft vorgesehen. Der Sensor 61 ist dabei in Kraftflussrichtung vor dem Kegelringgetriebe 10 angeordnet. Wie aus Figur 4 ersichtlich ist, ist eine Anpressvorrichtung 62 zwischen dem zweiten Zahnrad 27 der ersten Getriebestufe 25 und der Eingangswelle 41 des Eingangskegels 11 vorgesehen. Die Anpressvorrichtung 62 dieses Ausführungsbeispiels umfasst eine Kugel 63, welche auf einer schiefen Ebene 64, die an der Eingangswelle 41 angeordnet ist, läuft. Über die Anpressvorrichtung 62 ist somit eine Pedalkraftmessung mittels des Kraftsensors 61 möglich. Der Kraftsensor 61 ist mit einer Steuereinheit 60 verbunden, welche eingerichtet ist, basierend auf den erfassten Werten durch den Sensor 61 den elektrischen Antrieb 3 anzusteuern. Dadurch kann eine optimale Ansteuerung des elektrischen Antriebs 3 in Abhängigkeit von einer von einem Fahrer aufgebrachten Pedalkraft und vom Fahrer gewünschten Unterstützung durch den elektrischen Antrieb 3 ermöglicht werden. Ferner wird die vom Fahrer eingebrachte Pedalkraft dazu genutzt, das Kegelringgetriebe 10, genauer den Eingangskegel 11, in axialer Richtung zusätzlich zu einer vorhandenen Feder 63 vorzuspannen.

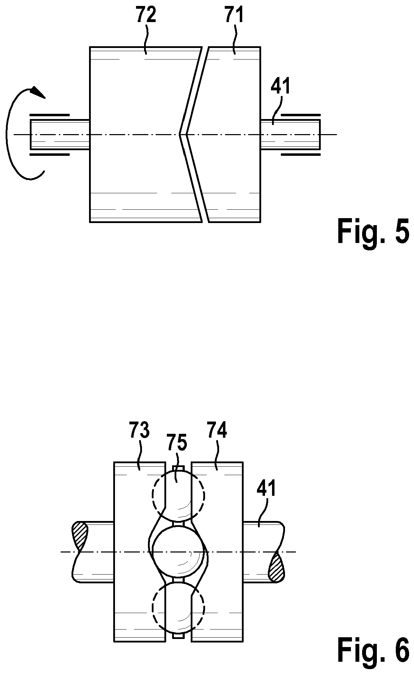

In den Figuren 5 und 6 sind noch zwei alternative Ausgestaltungen für die Anpressvorrichtung 62 dargestellt. Figur 5 zeigt dabei eine Ausgestaltung mit einem Positivkegel 71 und einem Negativkegel 72. Figur 6 zeigt eine alternative Anpressvorrichtung 62, umfassend eine erste Scheibe 73, eine zweite Scheibe 74 und eine Vielzahl von Kugeln 75, welche zwischen den beiden Scheiben 73, 74 angeordnet sind. Die Kugel 75 liegen dabei teilweise in Taschen, welche in den beiden Scheiben 73, 74 vorgesehen sind.

## Patentansprüche

1. Mit Motorkraft und/oder Pedalkraft betreibbares Fahrzeug, insbesondere Elektrofahrrad, umfassend
- einen Kurbeltrieb (2) mit einer Tretlagerwelle (20),
- ein Kettenblatt (4), welches ein Antriebsmoment für das Fahrzeug an eine Kette (5) abgibt, und
- einen elektrischen Antrieb (3),
**gekennzeichnet durch**
- ein Kegelringgetriebe (10) zur stufenlosen Änderung eines Übersetzungsverhältnisses,
- wobei das Kegelringgetriebe (10) und der elektrische Antrieb (3) am Kurbeltrieb (2) angeordnet sind und
- wobei das Kegelringgetriebe (10) derart mit dem Kurbeltrieb (2) verbunden ist und eingerichtet ist, ein durch einen Fahrer erzeugtes Drehmoment auf das Kettenblatt (4) zu übertragen, und
- wobei der elektrische Antrieb (3) innerhalb eines der Kegel des Kegelringgetriebes (10) angeordnet ist.

2. Fahrzeug nach Anspruch 1, **dadurch gekennzeichnet, dass** das Kegelringgetriebe (10) innerhalb eines Gehäuses des Kurbeltriebs angeordnet ist.

3. Fahrzeug nach einem der vorhergehenden Ansprüche, **dadurch gekennzeichnet, dass** der elektrische Antrieb (3) das Kettenblatt (4) über eine Getriebestufe (50) antreibt.

4. Fahrzeug nach einem der vorhergehenden Ansprüche, **gekennzeichnet durch** ein Planetengetriebe (15), welches zwischen einer Abtriebswelle (42) des Kegelringgetriebes (10) und dem Kettenblatt (4) angeordnet ist.

5. Fahrzeug nach einem der vorhergehenden Ansprüche, **dadurch gekennzeichnet, dass** eine Übersetzung des Kegelringgetriebes (10) mittels eines durch einen Fahrer betätigbaren Aktuators (5) veränderbar ist.

6. Fahrzeug nach einem der vorhergehenden Ansprüche, **dadurch gekennzeichnet, dass** die Tretlagerwelle (20) durch einen der Kegel des Kegelringgetriebes (10), insbesondere durch einen Ausgangskegel (12), verläuft.

7. Fahrzeug nach einem der vorhergehenden Ansprüche, ferner umfassend eine Steuereinheit (60) und einen Sensor (61) zur Erfassung einer Kraft, welche durch einen Fahrer aufgebracht wird, wobei die Steuereinheit (60) eingerichtet ist, den elektrischen Antrieb (3), basierend auf dem erfassten Kraftwert des Sensors (61) zu steuern.

8. Fahrzeug nach Anspruch 7, **gekennzeichnet durch** eine Kegelvorspanneinrichtung (14), welche einen der Kegel des Kegelringgetriebes (10) in axialer Richtung des Kegels vorspannt, wobei an der Kegelvorspanneinrichtung (14) eine Anpressvorrichtung (62) angeordnet ist und der Sensor (61) an der Anpressvorrichtung (62) angeordnet ist.

9. Fahrzeug nach Anspruch 8, **dadurch gekennzeichnet, dass** die Anpressvorrichtung (62) eine schiefe Ebene mit einer Kugel umfasst oder
- eine Kegelanordnung mit einem Positivkegel (71) und einem Negativkegel (72) oder
- eine Anordnung mit zwei Scheiben (73, 74) mit Taschen, in welchen Kugeln (75) angeordnet sind.

10. Fahrzeug nach einem der vorhergehenden Ansprüche, **dadurch gekennzeichnet, dass** das Kegelringgetriebe (10) oberhalb der Tretlagerwelle (20) angeordnet ist und/oder dass der elektrische Antrieb (3) unterhalb der Tretlagerwelle (20) angeordnet ist.

## Claims

1. Vehicle operable by motor power and/or pedal force, in particular electric bicycle, comprising
- a crank drive (2) with a bottom bracket shaft (20),
- a chain ring (4) which outputs a driving torque for the vehicle to a chain (5), and
- an electric drive (3),
**characterized by**
- a conical ring transmission (10) for infinitely variably changing a transmission ratio,
- wherein the conical ring transmission (10) and the electric drive (3) are arranged on the crank drive (2), and
- wherein the conical ring transmission (10) is connected to the crank drive (2) and configured in such a manner that a torque produced by a cyclist is transmitted to the chain ring (4), and
- wherein the electric drive (3) is arranged inside one of the cones of the conical ring transmission (10) .

2. Vehicle according to Claim 1, **characterized in that** the conical ring transmission (10) is arranged inside a housing of the crank drive.

3. Vehicle according to either of the preceding claims, **characterized in that** the electric drive (3) drives the chain ring (4) via a gear step (50).

4. Vehicle according to one of the preceding claims, **characterized by** a planetary gearing (15) which is arranged between an output shaft (42) of the conical ring transmission (10) and the chain ring (4).

5. Vehicle according to one of the preceding claims, **characterized in that** a transmission of the conical ring transmission (10) can be varied by means of an actuator (5) which is actuable by a cyclist.

6. Vehicle according to one of the preceding claims, **characterized in that** the bottom bracket shaft (20) runs through one of the cones of the conical ring transmission (10), in particular through an output cone (12).

7. Vehicle according to one of the preceding claims, furthermore comprising a control unit (60) and a sensor (61) for detecting a force which is applied by a cyclist, wherein the control unit (60) is configured to control the electric drive (3) on the basis of the force value detected by the sensor (61) .

8. Vehicle according to Claim 7, **characterized by** a cone-pretensioning device (14) which pretensions one of the cones of the conical ring transmission (10) in the axial direction of the cone, wherein a press-on device (62) is arranged on the cone-pretensioning device (14) and the sensor (61) is arranged on the press-on device (62).

9. Vehicle according to Claim 8, **characterized in that** the press-on device (62) comprises an oblique plane with a ball, or
- a cone arrangement with a positive cone (71) and a negative cone (72), or
- an arrangement with two discs (73, 74) having pockets in which balls (75) are arranged.

10. Vehicle according to one of the preceding claims, **characterized in that** the conical ring transmission (10) is arranged above the bottom bracket shaft (20), and/or **in that** the electric drive (3) is arranged below the bottom bracket shaft (20).

## Revendications

1. Véhicule pouvant être actionné de manière motorisée et/ou par une force de pédalage, notamment une bicyclette électrique, comprenant :
- une transmission à manivelle (2), avec un arbre de pédalier (20),
- un plateau (4) qui transmet un couple d'entraînement pour le véhicule à une chaîne (5) et
- un dispositif d'entraînement électrique (3),
**caractérisé par** :
- une transmission à anneaux coniques (10) pour la modification progressive d'un rapport de démultiplication,
- la transmission à anneaux coniques (10) et le dispositif d'entraînement électrique (3) étant disposés au niveau de la transmission à manivelle (2) et
- la transmission à anneaux coniques (10) étant reliée avec la transmission à manivelle (2) et étant conçue de façon à transmettre au plateau (4) un couple généré par un conducteur et
- le dispositif d'entraînement électrique (3) étant disposé à l'intérieur d'un des cônes de la transmission à anneaux coniques (10).

2. Véhicule selon la revendication 1, **caractérisé en ce que** la transmission à anneaux coniques (10) est disposée à l'intérieur d'un boîtier de la transmission à manivelle.

3. Véhicule selon l'une des revendications précédentes, **caractérisé en ce que** le dispositif d'entraînement électrique (3) entraîne le plateau (4) par l'intermédiaire d'un étage de transmission (50).

4. Véhicule selon l'une des revendications précédentes, **caractérisé par** un engrenage épicycloïdal (15) qui est disposé entre un arbre de sortie (42) de la transmission à anneaux coniques (10) et le plateau (4).

5. Véhicule selon l'une des revendications précédentes, **caractérisé en ce qu'**une démultiplication de la transmission à anneaux coniques (10) peut être modifiée au moyen d'un actionneur (5) pouvant être actionné par un conducteur.

6. Véhicule selon l'une des revendications précédentes, **caractérisé en ce que** l'arbre de pédalier (20) s'étend à travers un des cônes de la transmission à anneaux coniques (10), plus particulièrement à travers un cône de sortie (12).

7. Véhicule selon l'une des revendications précédentes, comprenant en outre une unité de commande (60) et un capteur (61) pour la détection d'une force appliquée par un conducteur, l'unité de commande (60) étant conçue pour contrôler le dispositif d'entraînement électrique (3) sur la base de la valeur de la force mesurée par le capteur (61).

8. Véhicule selon la revendication 7, **caractérisé par** un dispositif de précontrainte de cône (14), qui précontraint un des cônes de la transmission à anneaux coniques (10) dans la direction axiale du cône, dans lequel, sur le dispositif de précontrainte de cône (14), est disposé un dispositif de pression (62) et le capteur (61) est disposé sur le dispositif de pression (62) .

9. Véhicule selon la revendication 8, **caractérisé en ce que** le dispositif de pression (62) comprend un plan incliné avec une bille ou
- un dispositif à bille avec un cône positif (71) et un cône négatif (72) ou
- un dispositif avec deux disques (73, 74) avec des poches dans lesquelles sont disposées des billes (75) .

10. Véhicule selon l'une des revendications précédentes, **caractérisé en ce que** la transmission à anneaux coniques (10) est disposée au-dessus,de l'arbre de pédalier (20) et/ou **en ce que** le dispositif d'entraînement électrique (3) est disposé en dessous de l'arbre de pédalier (20).
